(19) Europäisches Patentamt
European Patent Office
Office européen des brevets

(11) **EP 4 180 834 B1**

(12) **EUROPEAN PATENT SPECIFICATION**

(45) Date of publication and mention
of the grant of the patent:
**24.06.2026 Bulletin 2026/26**

(21) Application number: **22206794.4**

(22) Date of filing: **10.11.2022**

(51) International Patent Classification (IPC):
*G01S 7/40* (2006.01)      *G01S 7/497* (2006.01)
*G01S 13/931* (2020.01)      *G01S 13/86* (2006.01)
*G01S 17/931* (2020.01)

(52) Cooperative Patent Classification (CPC):
**G01S 7/4026; G01S 7/4972; G01S 13/865;
G01S 13/931; G01S 17/931**

(54) **RADAR-LIDAR EXTRINSIC CALIBRATION IN UNSTRUCTURED ENVIRONMENTS**

RADAR-LIDAR-EXTRINSISCHE KALIBRIERUNG IN UNSTRUKTURIERTEN UMGEBUNGEN

ÉTALONNAGE EXTRINSÈQUE DE LIDAR DE RADAR DANS DES ENVIRONNEMENTS NON STRUCTURÉS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.11.2021 US 202117523566**

(43) Date of publication of application:
**17.05.2023 Bulletin 2023/20**

(73) Proprietor: **GM Cruise Holdings LLC
San Francisco, CA 94107 (US)**

(72) Inventor: **ROHATGI, Ankit
San Fransico (US)**

(74) Representative: **Manitz Finsterwald
Patent- und Rechtsanwaltspartnerschaft mbB
Martin-Greif-Straße 1
80336 München (DE)**

(56) References cited:
**US-A1- 2018 231 654      US-A1- 2021 316 669**

• HENG L: "Automatic targetless extrinsic
calibration of multiple 3D LiDARs and radars", 24
October 2020 (2020-10-24), pages 10669 - 10675,
XP009532629, ISBN: 978-1-7281-6212-6,
Retrieved from the Internet <URL:https://
ieeexplore.ieee.org/document/9340866/>
[retrieved on 20210210], DOI: 10.1109/
IROS45743.2020.9340866

**Description**

BACKGROUND

1. Technical Field

The subject technology provides solutions for autonomous vehicle systems, and in particular, for performing radar-to-lidar extrinsic calibration with on-road drive data.

2. Introduction

Autonomous vehicles are vehicles having computers and control systems that perform driving and navigation tasks that are conventionally performed by a human driver. As autonomous vehicle technologies continue to advance, ride-sharing services will increasingly utilize autonomous vehicles to improve service efficiency and safety. However, autonomous vehicles will be required to perform many of the functions that are conventionally performed by human drivers, such as avoiding dangerous or difficult routes, and performing other navigation and routing tasks necessary to provide a safe and efficient transportation. Such tasks may require the collection and processing of large quantities of data disposed on the autonomous vehicle.

US 2018/231654 A1 discloses a method and apparatus for calibrating a LiDAR system at a first location with a radar system at a second location. A calibration target is placed at a location and orientation with respect to the LiDAR system and the radar system.

HENG L discloses in "Automatic targetless extrinsic calibration of multiple 3D LiDARs and radars", published on 2020 IEEE/RSJ INTERNATIONAL CONFERENCE ON INTELLIGENT ROBOTS AND SYSTEMS (IROS), on 24 October 2020, a fully automatic and targetless calibration method for multiple 3D LiDAR and radar sensors and which allows the vehicle to be calibrated anywhere and anytime.

US 2021/316669 A1 discloses a polyhedral sensor target that includes multiple surfaces. A housing, such as a vehicle, may include a camera and a distance measurement sensor, such as a LIDAR sensor. The housing may move between different positions during calibration, for instance by being rotated atop a turntable.

BRIEF DESCRIPTION OF THE DRAWINGS

The invention is defined by a computer-implemented method for performing radar-to-lidar calibration, a system for performing radar-to-lidar calibration and a computer-readable medium according to the independent claims. Preferred embodiments are defined in the dependent claims. Certain features of the subject technology are set forth in the appended claims. However, the accompanying drawings, which are included to provide further understanding, illustrate disclosed aspects and together with the description serve to explain the principles of the subject technology. In the drawings:

FIG. 1 illustrates an example system environment that can be used to facilitate autonomous vehicle navigation and routing operations, according to some aspects of the disclosed technology.

FIGs. 2A and 2B illustrate example reflectors for radar-lidar calibration, according to some aspects of the disclosed technology.

FIGs. 3A and 3B illustrate an example lidar calibration process that utilizes a turntable to rotate a vehicle, according to some aspects of the disclosed technology.

FIG. 4 illustrates an example aggregated radar point cloud, according to some aspects of the disclosed technology.

FIGs. 5A-5F illustrate example graphs of cost functions utilizing radar, according to some aspects of the disclosed technology.

FIGs. 6A-6F illustrate example graphs of cost functions utilizing radar and lidar, according to some aspects of the disclosed technology.

FIGs. 7A and 7B illustrate example misaligned and calibrated images, according to some aspects of the disclosed technology.

FIG. 8 illustrates an example calibrated image, according to some aspects of the disclosed technology.

FIGs. 9A and 9B illustrate example radar images, according to some aspects of the disclosed technology.

FIGs. 10A-10C illustrate example calibration tools and methods, according to some aspects of the disclosed technology.

FIGs. 11A and 11B illustrate example before and after radar images, according to some aspects of the disclosed technology.

FIGs. 12A and 12B illustrate example before and after radar images, according to some aspects of the disclosed technology.

FIG. 13 illustrates an example radar image, according to some aspects of the disclosed technology.

FIGs. 14A-14L illustrate example graphs of cost functions of an embodiment, according to some aspects of the disclosed technology.

FIGs. 15A-15L illustrate example graphs of cost functions of the embodiment of FIGs. 14A-14L, according to some aspects of the disclosed technology.

FIGs. 16A-16L illustrate example graphs of cost functions of an embodiment, according to some aspects of the disclosed technology.

FIGs. 17A-17L illustrate example graphs of cost functions of the embodiment of FIGs. 16A-16L, according to some aspects of the disclosed technology.

FIGs. 18A-18L illustrate example graphs of cost functions of an embodiment, according to some aspects of the disclosed technology.

FIGs. 19A-19L illustrate example graphs of cost functions of the embodiment of FIGs. 18A-18L, according to some aspects of the disclosed technology.

FIG. 20 illustrates an example process of performing radar-to-lidar extrinsic calibration with on-road drive data, according to some aspects of the disclosed technology.

FIG. 21 illustrates an example processor-based system with which some aspects of the subject technology can be implemented.

DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a more thorough understanding of the subject technology. However, it will be clear and apparent that the subject technology is not limited to the specific details set forth herein and may be practiced without these details. In some instances, structures and components are shown in block diagram form in order to avoid obscuring the concepts of the subject technology.

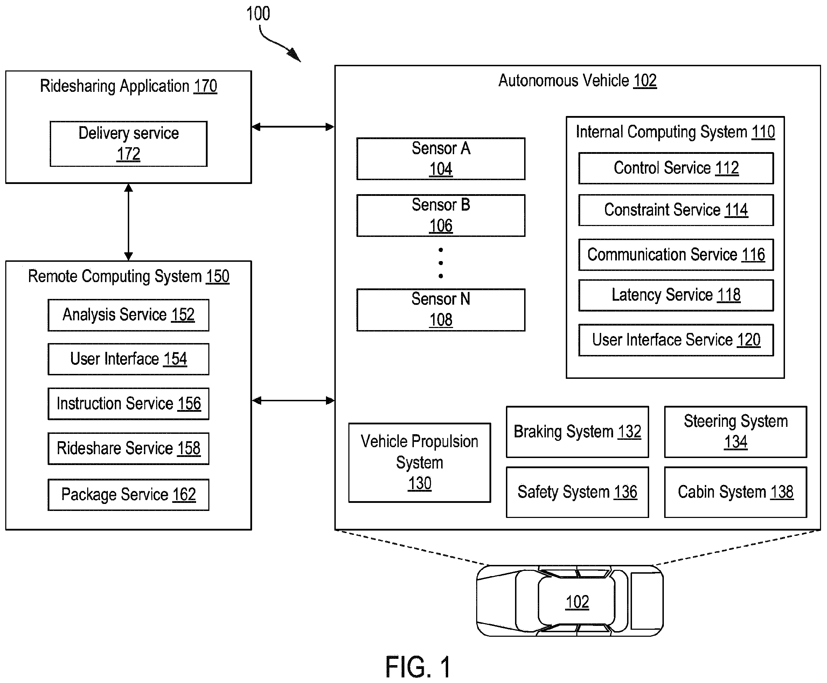

FIG. 1 illustrates an example system environment 100 that can be used to facilitate AV dispatch and operations, according to some aspects of the disclosed technology. Autonomous vehicle 102 can navigate about roadways without a human driver based upon sensor signals output by sensor systems 104-106 of autonomous vehicle 102. Autonomous vehicle 102 includes a plurality of sensor systems 104-106 (a first sensor system 104 through an Nth sensor system 106). Sensor systems 104-106 are of different types and are arranged about the autonomous vehicle 102. For example, first sensor system 104 may be a camera sensor system and the Nth sensor system 106 may be a Light Detection and Ranging (LIDAR) sensor system. Other exemplary sensor systems include radio detection and ranging (RADAR) sensor systems, Electromagnetic Detection and Ranging (EmDAR) sensor systems, Sound Navigation and Ranging (SONAR) sensor systems, Sound Detection and Ranging (SODAR) sensor systems, Global Navigation Satellite System (GNSS) receiver systems such as Global Positioning System (GPS) receiver systems, accelerometers, gyroscopes, inertial measurement units (IMU), infrared sensor systems, laser rangefinder systems, ultrasonic sensor systems, infrasonic sensor systems, microphones, or a combination thereof. While four sensors 180 are illustrated coupled to the autonomous vehicle 102, it is understood that more or fewer sensors may be coupled to the autonomous vehicle 102.

Autonomous vehicle 102 further includes several mechanical systems that are used to effectuate appropriate motion of the autonomous vehicle 102. For instance, the mechanical systems can include but are not limited to, vehicle propulsion system 130, braking system 132, and steering system 134. Vehicle propulsion system 130 may include an electric motor, an internal combustion engine, or both. The braking system 132 can include an engine brake, brake pads, actuators, and/or any other suitable componentry that is configured to assist in decelerating autonomous vehicle 102. In some cases, braking system 132 may charge a battery of the vehicle through regenerative braking. Steering system 134 includes suitable componentry that is configured to control the direction of movement of the autonomous vehicle 102 during navigation.

Autonomous vehicle 102 further includes a safety system 136 that can include various lights and signal indicators, parking brake, airbags, etc. Autonomous vehicle 102 further includes a cabin system 138 that can include cabin temperature control systems, in-cabin entertainment systems, etc.

Autonomous vehicle 102 additionally comprises an internal computing system 110 that is in communication with sensor systems 180 and systems 130, 132, 134, 136, and 138. Internal computing system 110 includes at least one processor and at least one memory having computer-executable instructions that are executed by the processor. The computer-executable instructions can make up one or more services responsible for controlling autonomous vehicle 102, communicating with remote computing system 150, receiving inputs from passengers or human co-pilots, logging metrics regarding data collected by sensor systems 180 and human co-pilots, etc.

Internal computing system 110 can include a control service 112 that is configured to control operation of vehicle propulsion system 130, braking system 132, steering system 134, safety system 136, and cabin system 138. Control service 112 receives sensor signals from sensor systems 180 as well communicates with other services of internal computing system 110 to effectuate operation of autonomous vehicle 102. In some embodiments, control service 112 may carry out operations in concert one or more other systems of autonomous vehicle 102.

Internal computing system 110 can also include constraint service 114 to facilitate safe propulsion of autonomous vehicle 102. Constraint service 116 includes instructions for activating a constraint based on a rule-based restriction upon operation of autonomous vehicle 102. For example, the constraint may be a restriction upon navigation that is activated in accordance with protocols configured to avoid occupying the same space as other objects, abide by traffic laws, circumvent avoidance areas, etc. In some embodiments, the constraint service can be part of control service 112.

The internal computing system 110 can also include communication service 116. The communication service 116 can include both software and hardware elements for transmitting and receiving signals from/to the remote computing system 150. Communication service 116 is configured to transmit information wirelessly over a network, for example, through an antenna array that provides connectivity using one or more cellular transmission standards, such as long-term evolution (LTE), 3G, 5G, or the like.

In some embodiments, one or more services of the internal computing system 110 are configured to send and receive communications to remote computing system 150 for such reasons as reporting data for training and evaluating machine learning algorithms, requesting assistance from remoting computing system or a human operator via remote computing system 150, software service updates, ridesharing pickup and drop off instructions etc.

Internal computing system 110 can also include latency service 118. Latency service 118 can utilize timestamps on communications to and from remote computing system 150 to determine if a communication has been received from the remote computing system 150 in time to be useful. For example, when a service of the internal computing system 110 requests feedback from remote computing system 150 on a time-sensitive process, the latency service 118 can determine if a response was timely received from remote computing system 150 as information can quickly become too stale to be actionable. When the latency service 118 determines that a response has not been received within a threshold, latency service 118 can enable other systems of autonomous vehicle 102 or a passenger to make necessary decisions or to provide the needed feedback.

Internal computing system 110 can also include a user interface service 120 that can communicate with cabin system 138 in order to provide information or receive information to a human co-pilot or human passenger. In some embodiments, a human co-pilot or human passenger may be required to evaluate and override a constraint from constraint service 114, or the human co-pilot or human passenger may wish to provide an instruction to the autonomous vehicle 102 regarding destinations, requested routes, or other requested operations.

As described above, the remote computing system 150 is configured to send/receive a signal from the autonomous vehicle 140 regarding reporting data for training and evaluating machine learning algorithms, requesting assistance from remote computing system 150 or a human operator via the remote computing system 150, software service updates, rideshare pickup and drop off instructions, etc.

Remote computing system 150 includes an analysis service 152 that is configured to receive data from autonomous vehicle 102 and analyze the data to train or evaluate machine learning algorithms for operating the autonomous vehicle 102. The analysis service 152 can also perform analysis pertaining to data associated with one or more errors or constraints reported by autonomous vehicle 102.

Remote computing system 150 can also include a user interface service 154 configured to present metrics, video, pictures, sounds reported from the autonomous vehicle 102 to an operator of remote computing system 150. User interface service 154 can further receive input instructions from an operator that can be sent to the autonomous vehicle 102.

Remote computing system 150 can also include an instruction service 156 for sending instructions regarding the operation of the autonomous vehicle 102. For example, in response to an output of the analysis service 152 or user interface service 154, instructions service 156 can prepare instructions to one or more services of the autonomous vehicle 102 or a co-pilot or passenger of the autonomous vehicle 102.

Remote computing system 150 can also include rideshare service 158 configured to interact with ridesharing applications 170 operating on (potential) passenger computing devices. The rideshare service 158 can receive requests to be picked up or dropped off from passenger ridesharing app 170 and can dispatch autonomous vehicle 102 for the trip. The rideshare service 158 can also act as an intermediary between the ridesharing app 170 and the autonomous vehicle wherein a passenger might provide instructions to the autonomous vehicle to 102 go around an obstacle, change routes, honk the horn, etc.

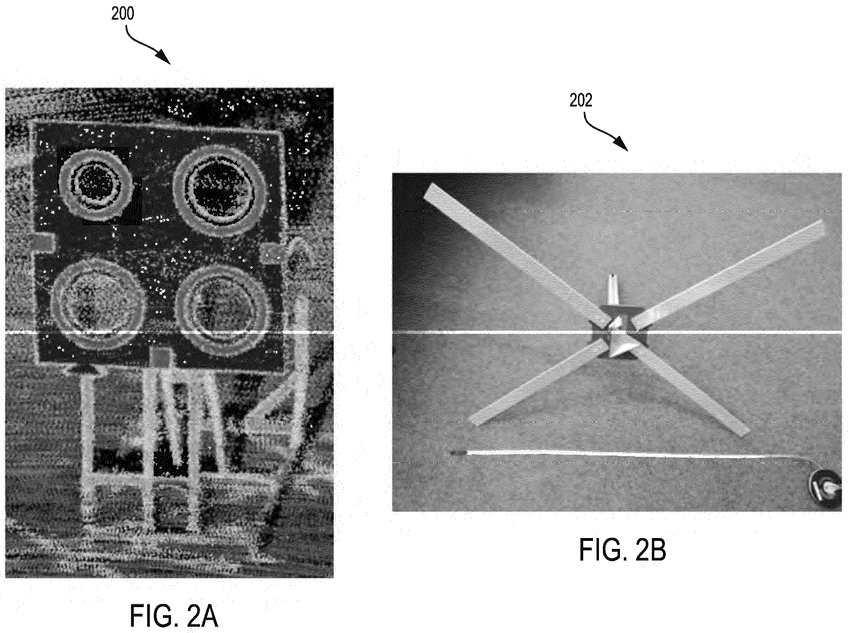

FIGs. 2A and 2B illustrate example reflectors 200, 202 for radar-lidar calibration, according to some aspects of the disclosed technology.

In some implementations, methods of radar-lidar calibration can include utilizing calibration targets 200, 202 as shown in FIGs. 2A and 2B. FIG. 2A illustrates a target board 200 with apertures distributed throughout, and FIG. 2B illustrates a target cross 202. Both targets 200, 202 can include reflectors that may be detected by radar and lidar for calibration purposes. For example, corner reflectors may be associated in lidar and radar to optimize relative pose to minimize distance. In some examples, accurate detection of the same target (e.g., targets 200, 202 as shown in FIGs. 2A and 2B) by both radar and lidar may require special targets, which may include a long lead time, be expensive, and require additional resources. Moreover, accurate detections with radar may be tricky due to sensor noise and sparseness.

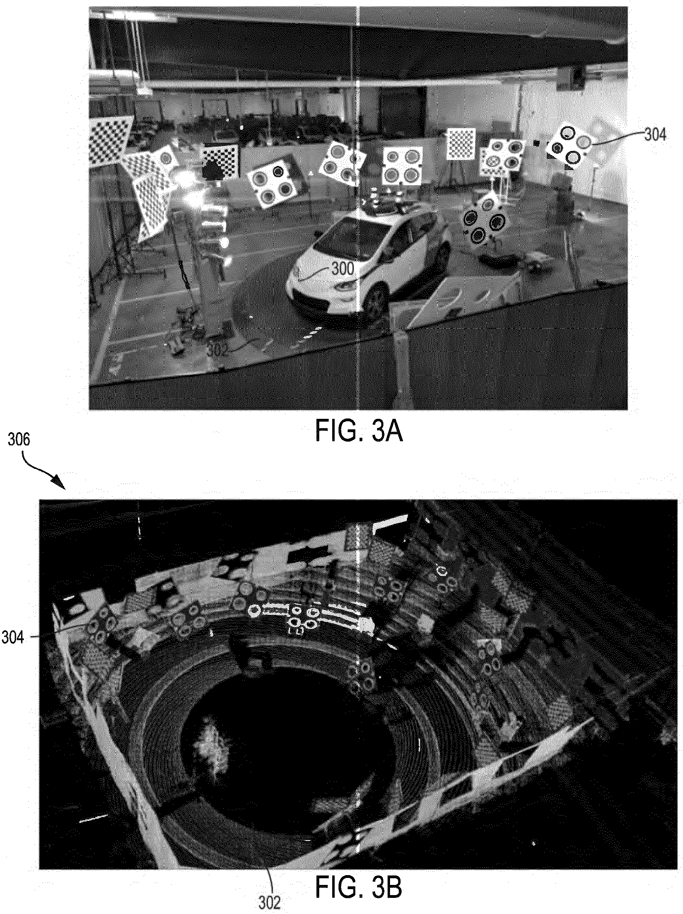

FIGs. 3A and 3B illustrate an example lidar calibration process that utilizes a turntable 302 to rotate a vehicle 300, according to some aspects of the disclosed technology.

In some implementations, the vehicle 300 can be rotated on the turntable 302 in a controlled scene with targets 304. A lidar calibration process can build a high resolution map 306 of the scene and provide vehicle pose at each position on the turntable 302. In some examples, hole target detection (e.g., by utilizing targets 304) in a lidar map can provide a pose of each target 304 relative to the vehicle 300 to aid target-based camera-lidar and radar-lidar calibration.

In other implementations, corner reflectors can be fixed and/or at a known pose relative to hole targets 304 to facilitate radar-lidar calibration. In some examples, a large number of associations (e.g., in the hundreds) is possible as the vehicle 300 can be rotated on the turntable 302. A root-mean-square error (RMSE) can also be utilized to gauge calibration quality.

In other examples, radar-lidar targets 304 can take time to design, fabricate, and maintain. There may also be stack up of errors from hole target detection, frame construction, and radar target detections. Moreover, having a lot of metal in the scene (e.g., stands, overhead structures, walls, etc.) may decrease the reliability of the radar target detection.

Traditional target-based radar-lidar calibration is prone to target detection errors and requires a high degree of control on the fixture design and the environment around a vehicle. This type of process takes a significant amount of time and effort to design and develop a stable and scalable process for a vehicle fleet. Moreover, target-based methods cannot be usable on-road after the vehicle has been deployed. Calibration tests conducted within a warehouse (e.g., metallic roof, pillars, etc.) with many other fixtures for other calibrations make it difficult to obtain quality target returns necessary for a good calibration.

As such, a need exists to perform radar-radar and radar-lidar extrinsic calibration in unstructured environments (e.g., without special calibration specific targets).

As discussed herein, in some implementations, systems and methods can include utilizing point cloud registration and entropy minimization to align radar and lidar point clouds gathered from different vehicle poses. The systems and methods as described herein provide for a more robust and accurate process of calibration.

In other implementations, the systems and methods as described herein can generate aggregated maps of a scene with multiple radar and lidar point clouds by using entropy minimization as a cost function to globally optimize six degrees of freedom calibration between sensors.

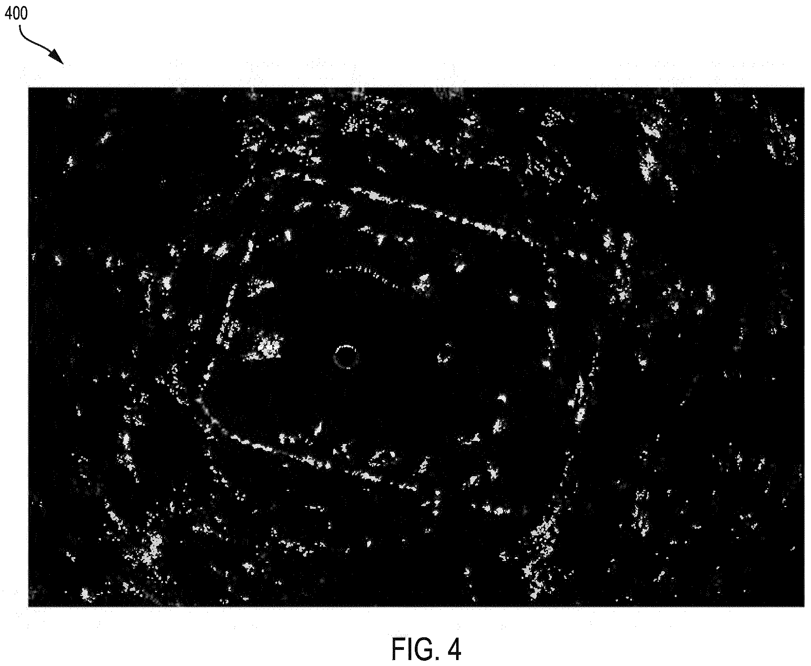

FIG. 4 illustrates an example aggregated radar point cloud 400, according to some aspects of the disclosed technology.

In some implementations, purposes of the aggregated radar point cloud 400 generated from different poses of the vehicle (e.g., the vehicle 300 of FIG 3A) may be to provide "crisp" target detections as possible (e.g., walls, targets, etc. may have reasonable noise levels) and to be aligned with a lidar map. Minimizing "fuzziness" can be a result of good calibration with/without targets (e.g., unstructured environments).

Entropy Minimization:

$$H_{RQE}[\hat{\mathbf{X}}] = -\log\left(\frac{1}{N^2}\sum_{i=1}^{N}\sum_{j=1}^{N}G(\hat{\mathbf{x}}_i - \hat{\mathbf{x}}_j, 2\sigma^2\mathbf{I})\right)$$

Eq. 1

Equation 1 can be a measure of compactness of points in X with an information-theoretic provenance, for which a free parameter is $\sigma$. For purposes of optimization, the logarithm may be a monotonic operator and the scale factor may be unnecessary, so these terms may be dropped to produce a cost function, as provided below in Equation 2.

$$E(\hat{\mathbf{X}}) = -\sum_{i=1}^{N}\sum_{j=1}^{N}G(\hat{\mathbf{x}}_i - \hat{\mathbf{x}}_j, 2\sigma^2\mathbf{I}),$$

Eq. 2

The cost function of Equation 2 may depend on pairwise distances between measured points in X. For Equations 1 and 2, $x_i$ can refer to a 3D position vector for a return. $\sigma$ can refer to a standard deviation of a gaussian kernel (e.g., an adjustable parameter). I can refer to an identity matrix. N can refer to a number of points. E(X) can refer to a cost function as described herein.

In some implementations, the cost function of Equation 2 can be utilized to measure "crispness" of a point cloud based on radar data. The cost value may be scene specific, but location of minima may not be. In other implementations, the radar scans can be aggregated together from different positions of a vehicle in a common frame of reference. The cost function (e.g., as described in Equation 2) can be calculated based on the data from the radar scans. The aggregated process can assume a lidar to radar extrinsic pose (e.g., six degrees of freedom (DoF)) to transform a lidar point cloud from a radar frame of reference to a lidar frame of reference (e.g., a lidar_T_radar). In some examples, the systems and methods as described herein can utilize the transformation from a position of the vehicle to the initial starting position in the lidar frame (e.g., a starting_pos_T_initial_pos). For example, the transformation can be an outcome of a lidar-lidar calibration process or can be generated based on aligning lidar point clouds independent of the radar (e.g., using iterative closest point (ICP) techniques). In some on-road examples, the transformation can be replaced with vehicle odometry or localization outputs. In other examples, $x_i$ (e.g., at a lidar frame at an initial starting position) = starting_pos_T_initial_pos * lidar_T_radar * x_i_radar_frame. After the transformation, Equation 2 can be utilized to determine an equivalent cost function.

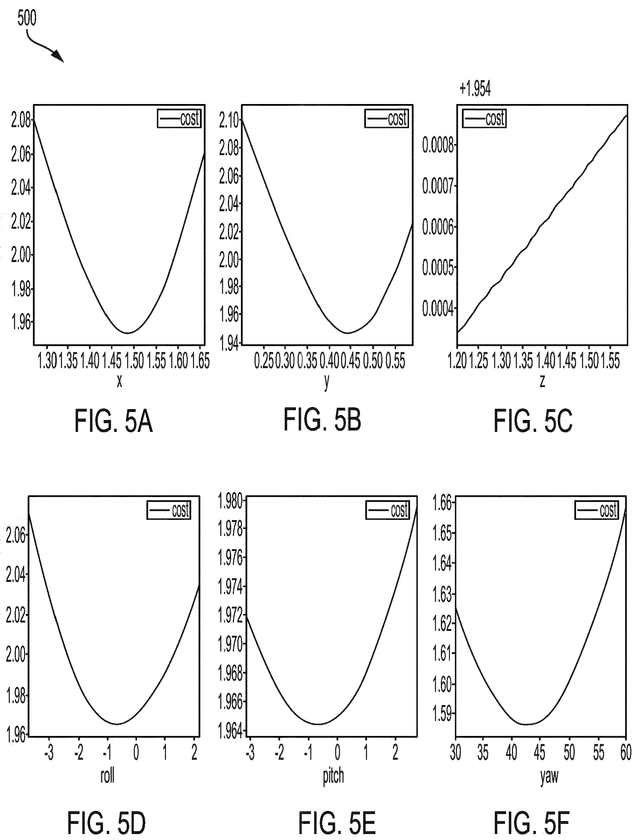

FIGs. 5A-5F illustrate example graphs of cost functions utilizing radar 500, according to some aspects of the disclosed technology. FIGs. 5A-5F further illustrate cost functions of six degrees of freedom (DoF): FIG. 5A - "x;" FIG. 5B - "y;" FIG. 5C - "z;" FIG. 5D - "roll;" FIG. 5E - "pitch;" and FIG. 5F - "yaw."

In some implementations, the cost functions of FIGs. 5A-5F may be the cost functions determined for a single radar (e.g., self-alignment). The entropy can be calculated for radar extrinsic, aggregate radar scans from the various stops (e.g., poses/six DoF) using lidar calibration. However, a single radar cost function may not be sufficient because of a strong signal in the x, y, roll, and pitch direction, a weak signal in the z direction (e.g., shift of point cloud may be change crispness), and a weak signal in the yaw direction (e.g., sparse data).

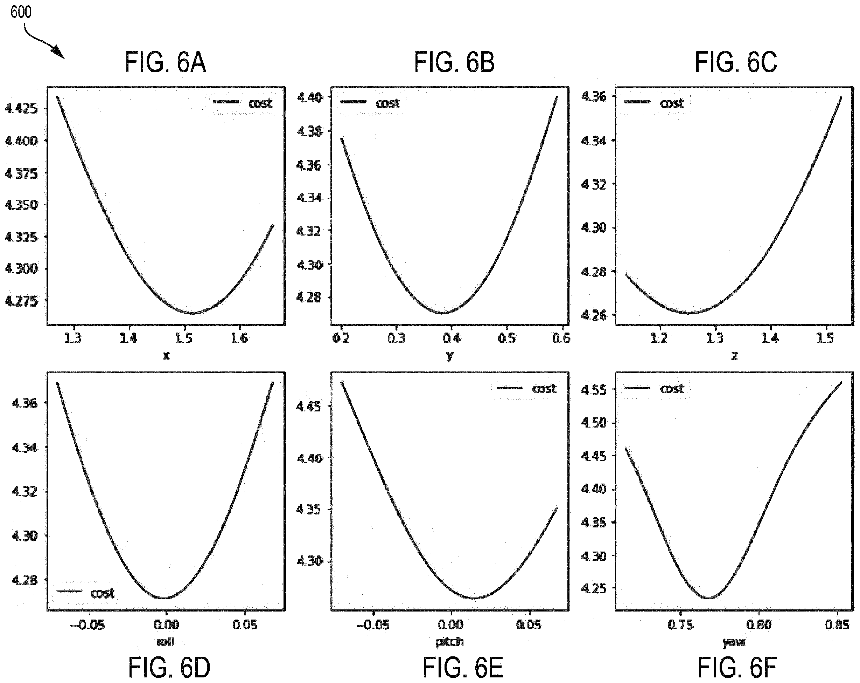

FIGs. 6A-6F illustrate example graphs of cost functions utilizing radar and lidar 600, according to some aspects of the disclosed technology. FIGs. 6A-6F further illustrate cost functions of six degrees of freedom (DoF): FIG. 6A - "x;" FIG. 6B - "y;" FIG. 6C - "z;" FIG. 6D - "roll;" FIG. 6E - "pitch;" and FIG. 6F - "yaw."

In some implementations, radar scans and a lidar map (e.g., downsampled) can be utilized to force alignment of radar with lidar. For example, cost functions may be convex in six DoF including x, y, z, roll, pitch, and yaw. The z-signal may be unreliable as radar and lidar features may not match, partly due to elevation noise. In other implementations, the cost function can include a signal global minima proximate to an expected solution that can indicate whether a signal is miscalibrated. For example, if increasing a radar-to-lidar offset increases a value in either direction away from the solution that visually appears to be calibrated (e.g., best calibration), then for another vehicle, convex optimization can be performed to search for a global minima that may be the most optimal setting (e.g., lidar_T_radar), without user intervention to perform visual checks.

In other implementations, the z value may be fixed to a computer aided design (CAD) value. In some examples, the CAD value can refer to a radar pose relative to a vehicle chassis. A physical sensor mounting process can include some errors. As such, the actual mounting process can be different from what was intended by design. The systems and processes as described herein can provide a calibration process as each car uniquely differs from an intended design. Moreover, ten DoF optimization (e.g., x, y, roll, pitch, yaw) times two radars may utilize solvers (e.g., a Ceres solver) to generate a result. In one example, six runs in total were performed, three runs with turntable 1 ("TT1") and three runs with turntable 2 ("TT2"). TT1 included many radar reflectors for target-based calibration. TT2 is a larger turntable, but included less reflectors for conti-radars. Some reflectors were not in the field of view.

Table 1: (max-min) pose relative to roof-left lidar

|  | Roof_front_left_45 | Roof_front_right_45 |
|---|---|---|
| X [m] | 0.019859 | 0.021434 |
| Y [m] | 0.011280 | 0.007827 |
| Z [m] | 0.007486 | 0.008039 |
| Roll [deg] | 0.232350 | 0.370030 |
| Pitch [deg] | 0.242064 | 0.209772 |
| Yaw [deg] | 0.147191 | 0.083011 |

For roof-right, roll change may be high, but is consistent for a given scene. TT1 included a roll max-min of 0.1 degrees (roof-right), and TT2 included a roll max-min of 0.06 degrees (roof-right).

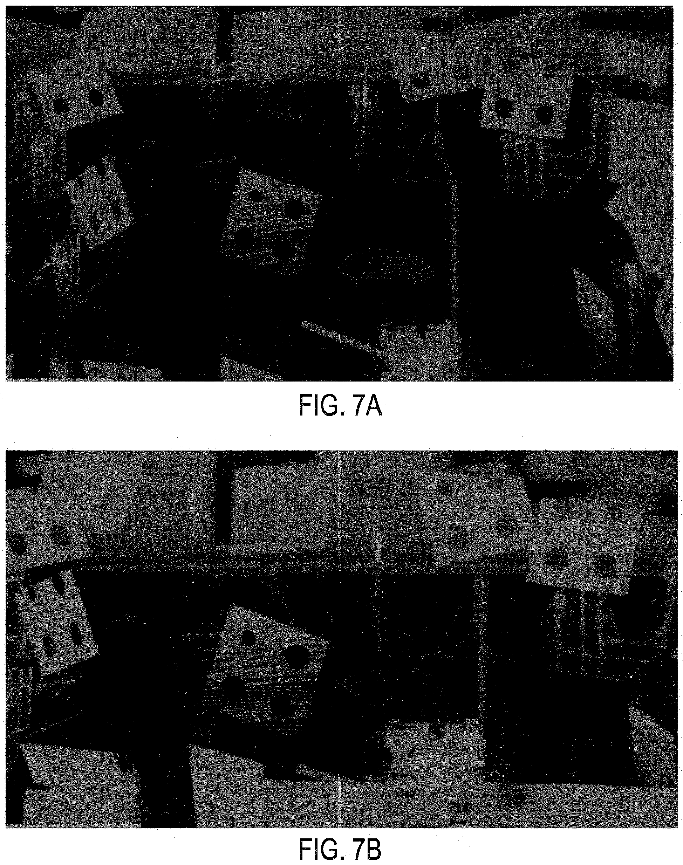

FIGs. 7A and 7B illustrate example misaligned and calibrated images, according to some aspects of the disclosed technology. For example, FIG. 7A illustrates a misalignment in yaw, while FIG. 7B illustrates a calibrated radar-lidar system.

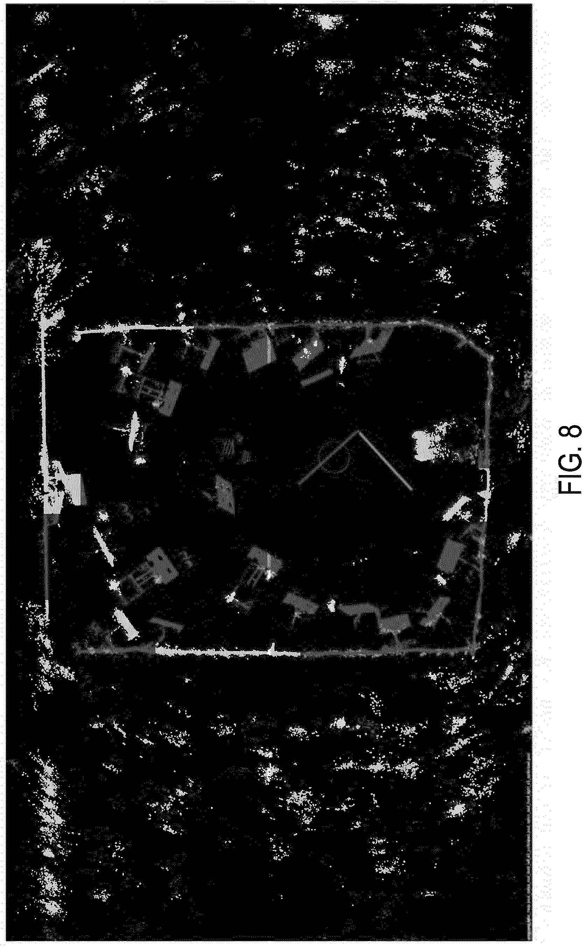

FIG. 8 illustrates an example calibrated image, according to some aspects of the disclosed technology. For example, FIG. 8 illustrates a top view of a calibrated image using the radar-lidar calibration process as described herein.

In some implementations, a vehicle was brought back to TT1 to confirm scene dependence and ensure that the sensor did not shift. Parameter and algorithm tuning can be performed intermittently. The z value may be fixed to a CAD value. Moreover, ten DoF optimization (e.g., x, y, roll, pitch, yaw) times two radars may utilize solvers (e.g., a Ceres solver) to generate a result. In one example, eight runs in total were performed, five runs with TT1 and three runs with TT2.

Table 2: (max-min) pose relative to roof-left lidar

|  | Roof left (both scenes) | Roof right (both scenes) | Roof left (TT1) | Roof right (TT1) | Roof left (TT2) | Roof right (TT2) |
|---|---|---|---|---|---|---|
| X [m] | 0.017476 | 0.019229 | 0.006310 | 0.007847 | 0.001377 | 0.002475 |
| Y [m] | 0.011152 | 0.005844 | 0.003404 | 0.004718 | 0.000757 | 0.000843 |
| Z [m] | 0.007517 | 0.008054 | 0.004717 | 0.008054 | 0.000564 | 0.000317 |
| Roll [deg] | 0.291802 | 0.400420 | 0.213418 | 0.118074 | 0.119291 | 0.060538 |
| Pitch [deg] | 0.234209 | 0.264259 | 0.233605 | 0.189628 | 0.037206 | 0.008818 |
| Yaw [deg] | 0.093825 | 0.068758 | 0.088975 | 0.064607 | 0.055528 | 0.047507 |

In some implementations, yaw repeatability was within less than 0.1 degrees, and roll and pitch were within less than 0.4 degrees, for a translation of less than two centimeters. Repeatability was acceptable for TT1 and TT2, with some scene dependence for roof-right radar pitch. There also appeared to be no apparent sensor shift as the TT1 run was two days after the TT2 run, which produced similar results as the initial TT1 results.

In another implementation, eight TT1 runs were performed while fixing z to a CAD value.

Table 3: (max-min) pose relative to roof-left lidar

|  | Roof left (TT1) | Roof right (TT1) |
|---|---|---|
| X [m] | 0.005089 | 0.004156 |
| Y [m] | 0.006364 | 0.011487 |
| Z [m] | 0.016452 | 0.018081 |
| Roll [deg] | 0.173807 | 0.353290 |

(continued)

|  | Roof left (TT1) | Roof right (TT1) |
|---|---|---|
| Pitch [deg] | 0.188681 | 0.215788 |
| Yaw [deg] | 0.093217 | 0.061581 |

In some implementations, the lidar calibrations passed with a 100% pass rate.

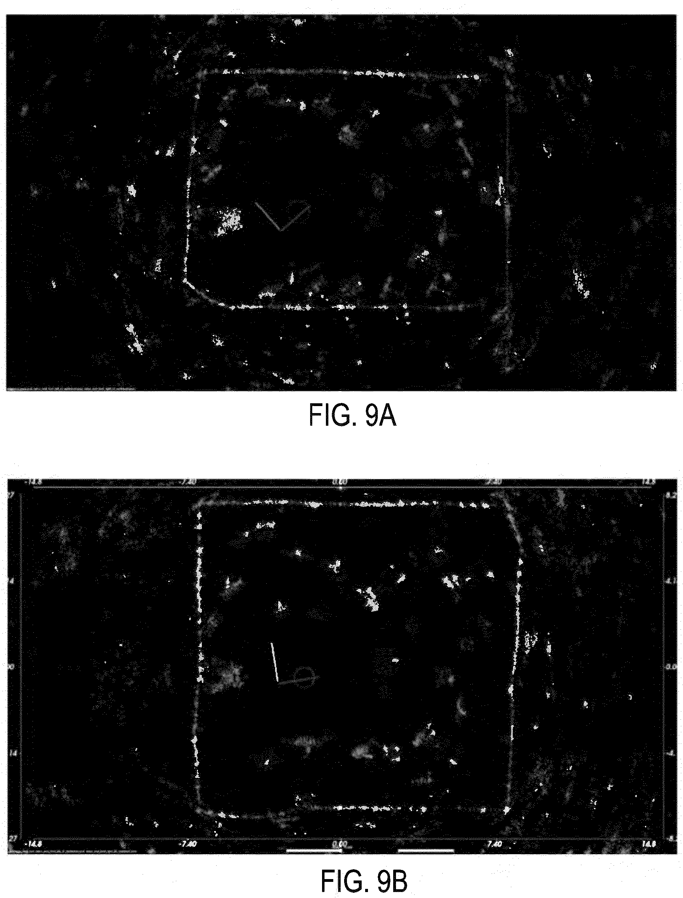

FIGs. 9A and 9B illustrate example radar images, according to some aspects of the disclosed technology. FIG. 9A illustrates a top view radar image of a radar on TT1. For example, TT1 includes many corner reflectors in the field of vision of the radar, smaller in size than TT2, and includes a concrete wall on one side. FIG. 9B illustrates a top view radar image of a radar on TT2. Most TT2 returns include returns from partition walls and a few corner reflectors close to the height of the radar.

In some implementations, the z value can be calibrated. For example, calibrating z values can be difficult as feature overlap between lidar and radar is not very high in a scene. In some examples, one radar z (roof-left) can be locked, while allowing the other to be calibrated (e.g., eleven DoF optimization at a time). In one example, eight runs in total were performed, five runs with TT1 and three runs with TT2.

Table 4: (max-min) pose relative to roof-left lidar

|  | Roof left (both scenes) | Roof right (both scenes) | Roof left (TT1) | Roof right (TT1) | Roof left (TT2) | Roof right (TT2) |
|---|---|---|---|---|---|---|
| X [m] | 0.016783 | 0.019800 | 0.006095 | 0.007731 | 0.001734 | 0.002080 |
| Y [m] | 0.010686 | 0.004765 | 0.003369 | 0.004658 | 0.000948 | 0.001134 |
| Z [m] | 0.007519 | 0.052514 | 0.004749 | 0.015947 | 0.000565 | 0.025862 |
| Roll [deg] | 0.289261 | 0.398610 | 0.216612 | 0.113912 | 0.117266 | 0.056400 |
| Pitch [deg] | 0.404252 | 0.193672 | 0.306376 | 0.180303 | 0.092834 | 0.141986 |
| Yaw [deg] | 0.096646 | 0.063923 | 0.078115 | 0.058540 | 0.057447 | 0.046609 |

Table 4 illustrates some scene dependence and roll/pitch issues, which may be transferred to other roll/pitch dimensions or radar extrinsic. For example, 5 cm of z change may indicate that elevation noise may limit the calibration of the z value.

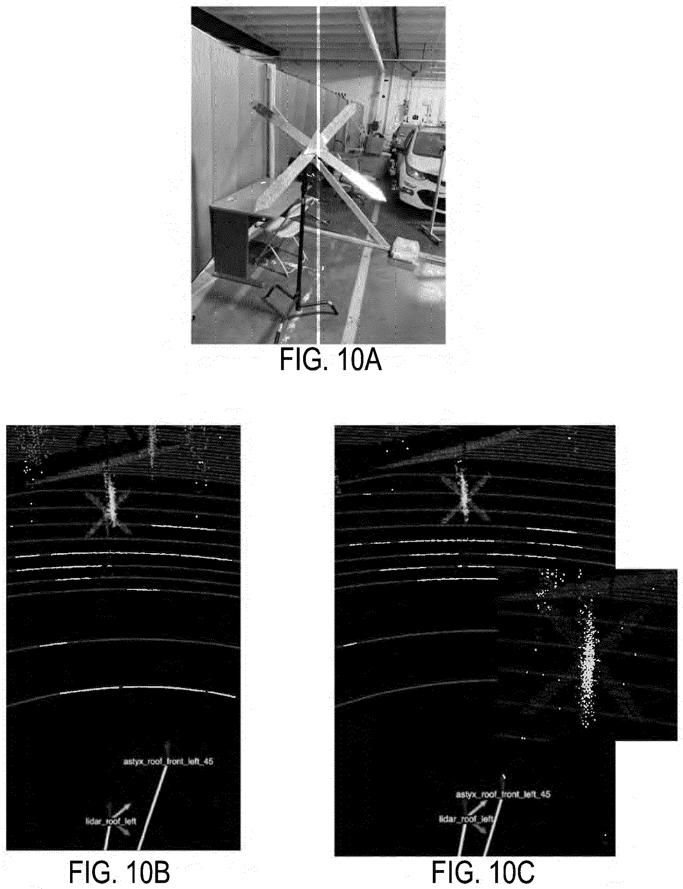

FIGs. 10A-10C illustrate example calibration tools and methods, according to some aspects of the disclosed technology. FIG. 10A illustrates an example calibration tool (e.g., a target with high reflectivity) that can be utilized for the calibration process described herein. FIG. 10B illustrates misalignment via manual calibration processes as demonstrated by the misalignment of the target. FIG. 10C illustrates a correctly calibrated radar utilizing an unstructured calibration method as described herein. As shown in FIG. 10C, the radar detection of the target (also enlarged) is correctly aligned by utilizing the unstructured calibration method as described herein.

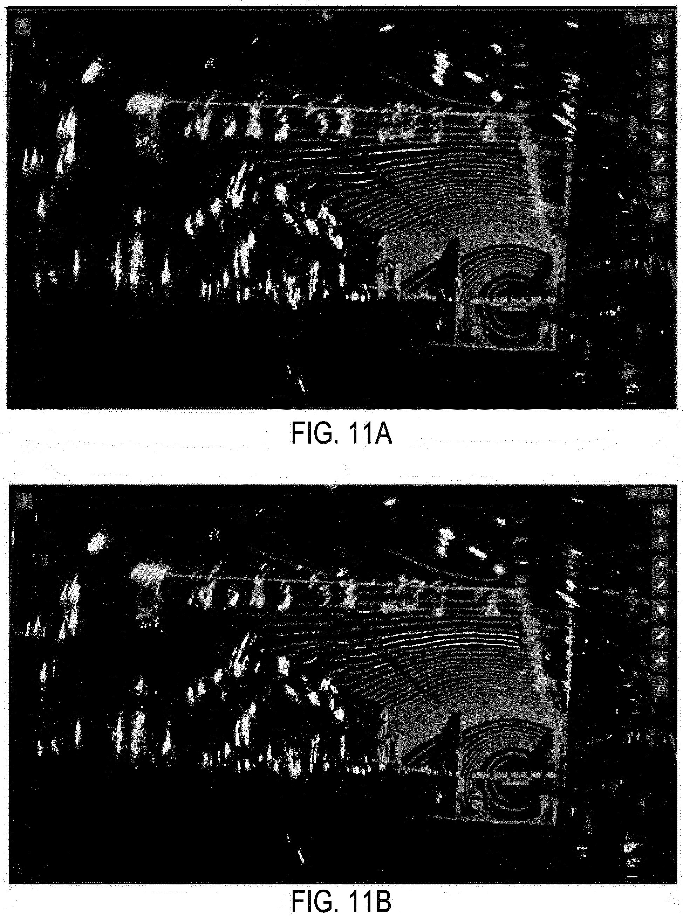

FIGs. 11A and 11B illustrate example before and after radar images, according to some aspects of the disclosed technology. FIG. 11A illustrates before radar images that utilize a manual calibration, while FIG. 11B illustrates a calibrated radar utilizing an unstructured calibration method as described herein (e.g., calibration between radars and roof-left lidar).

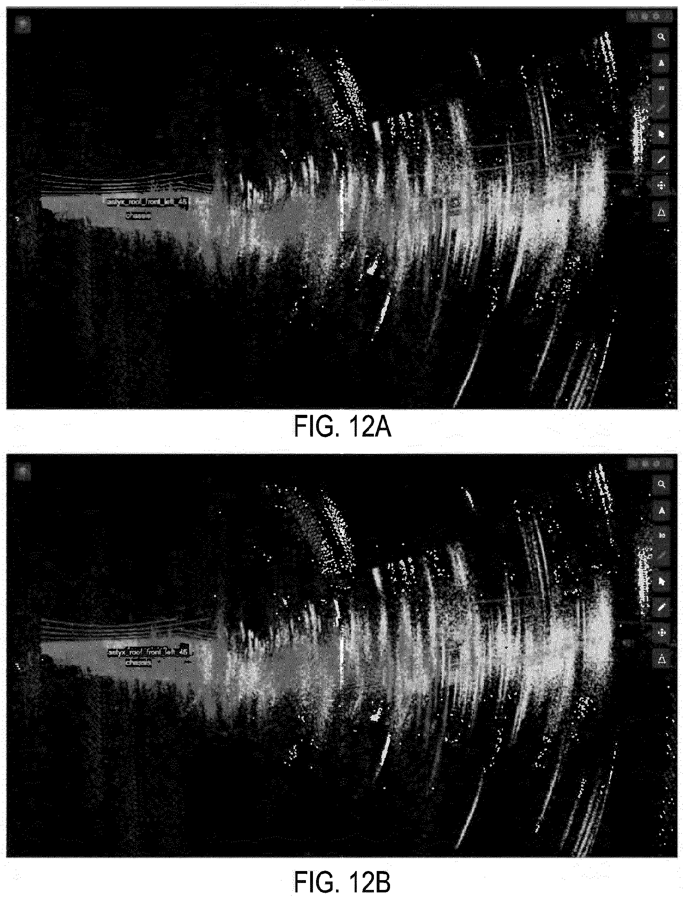

FIGs. 12A and 12B illustrate example before and after radar images, according to some aspects of the disclosed technology. FIG. 12A illustrates before radar images that utilize a manual calibration, while FIG. 12B illustrates a calibrated radar utilizing an unstructured calibration method as described herein. In some examples, elevation changes may be hard to observe visually. In response, the system as described herein may further include utilizing filters to remove noise and detect features.

In some implementations, a comparison with target detection may be utilized by the method and system described herein. For example, a stack up of errors can include: hole target detection in a lidar point cloud that may have small pose errors; a lidar board and radar target that may not be attached to a rigid frame; and radar target detection uncertainty due to sensor noise. Repeatability may indicate that target detection are adequate to be utilized as a check.

Table 5: (max-min) pose relative to roof-left lidar

|  | Roof left (TT1) | Roof right (TT1) |
|---|---|---|
| X [m] | 0.028987 | 0.027554 |

(continued)

|  | Roof left (TT1) | Roof right (TT1) |
|---|---|---|
| Y [m] | 0.031328 | 0.011166 |
| Z [m] | 0.100583 | 0.075382 |
| Roll [deg] | 0.144283 | 0.140538 |
| Pitch [deg] | 1.052281 | 0.476451 |
| Yaw [deg] | 0.433902 | 0.403891 |

In some implementations, a yaw repeatability of approximately 0.4 degrees and roll/pitch of approximately 1 degree.

In other implementations, transforms can be applied to incoming radar scans, and computed extrinsics can be utilized to recover the transform. Results converged to expected values and tested to within 5 cm translation and three degrees of rotation offset. The calibration process as described herein can properly calibrate misalignments with less dependence on targets.

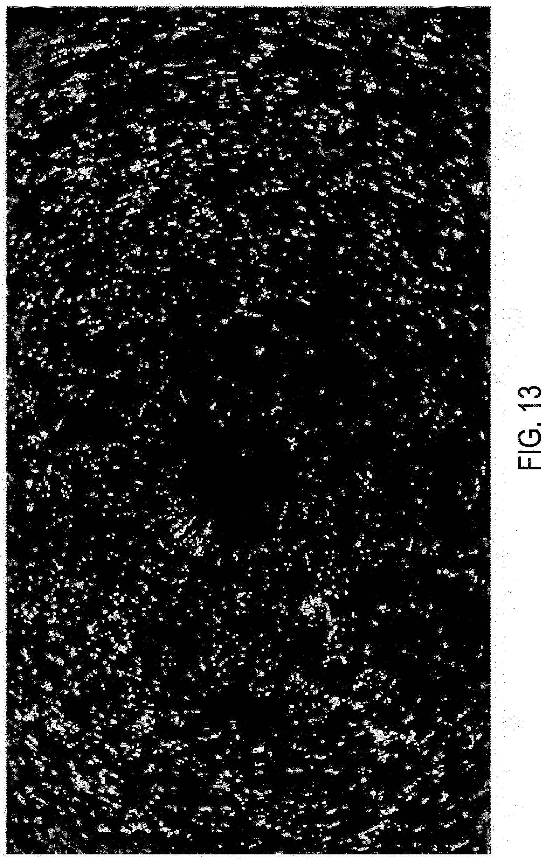

FIG. 13 illustrates an example radar image, according to some aspects of the disclosed technology. As shown in FIG. 13, an aggregated cloud is illustrated for a radar front. In some implementations, eight long range radars (LRR) can be utilized with no/unusable elevation data being equal to or greater than x, y, and yaw calibrations. In some examples, short range may also utilize a "near scan" mode. Filters may further be utilized and based on RCS, range, and azimuth data.

Repeatability of current target-based method:

Table 6: (max-min) pose relative to roof-left lidar

|  | X_rel (m) | Y_rel (m) | Yaw_rel (deg) |
|---|---|---|---|
| Radar_front | 0.155517 | 0.058835 | 0.792577 |
| Radar_rear | 0.154509 | 0.073017 | 0.876164 |
| Radar_front_left_45 | 0.057715 | 0.152050 | 0.873768 |
| Radar_front_right_45 | 0.115960 | 0.033294 | 0.616749 |
| Radar_front_left_90 | 0.165568 | 0.058682 | 0.727369 |
| Radar_front_right_90 | 0.087597 | 0.031060 | 1.955809 |
| Radar_back_left_45 | 0.125271 | 0.032563 | 0.626507 |
| Radar_back_right_45 | 0.044588 | 0.115123 | 0.545004 |

Table 6 may illustrate a two degree of change in yaw with a translation of 15-16 cm. In some examples, targets may have been too close to the vehicle and the returns may have been of poor quality. There may also have been a stack up of detection errors.

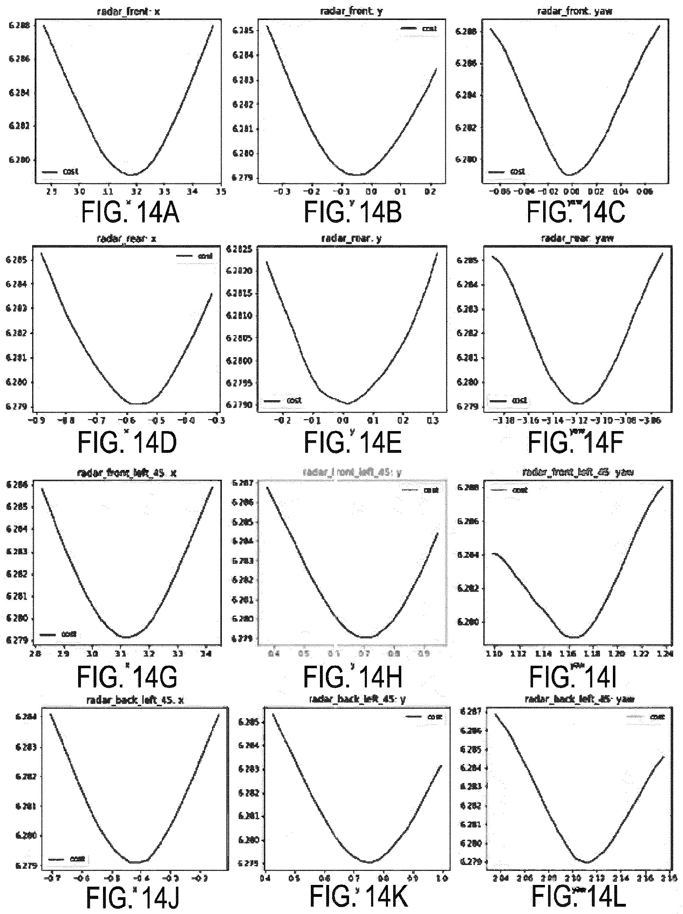

FIGs. 14A-14L illustrate example graphs of cost functions of an embodiment, according to some aspects of the disclosed technology. FIGs. 14A-14L further illustrate example unstructured cost functions of TT1 including: FIG. 14A - "radar_front: x;" FIG. 14B - "radar_front: y;" FIG. 14C - "radar_front: yaw;" FIG. 14D - "radar_rear: x;" FIG. 14E - "radar_rear: y;" FIG. 14F - "radar_rear: yaw;" FIG. 14G - "radar_front_left_45: x;" FIG. 14H - "radar_front_left_45: y;" FIG. 14I - "radar_front_left_45: yaw;" FIG. 14J - "radar_back_left_45: x;" FIG. 14K - "radar_back_left_45: y;" and FIG. 14L - "radar_back_left_45: yaw."

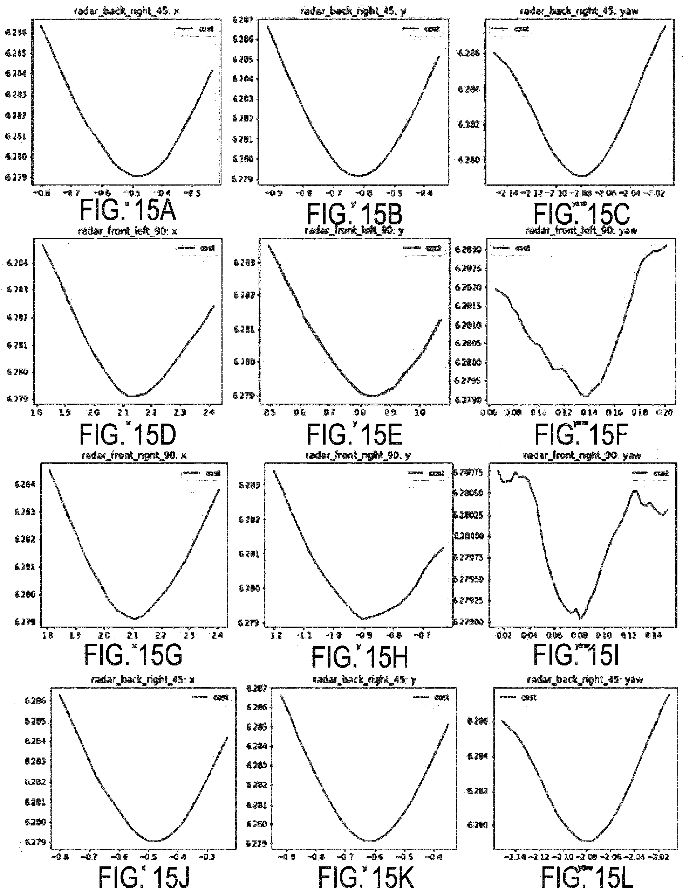

FIGs. 15A-15L illustrate example graphs of cost functions of the embodiment of FIGs. 14A-14L, according to some aspects of the disclosed technology. FIGs. 15A-15L further illustrate example unstructured cost functions of TT1 including: FIG. 15A - "radar_back_right: x;" FIG. 15B - "radar_back_right_45: y;" FIG. 15C - "radar_back_right_45: yaw;" FIG. 15D - "radar_front_left_90: x;" FIG. 15E - "radar_front_left_90: y;" FIG. 15F - "radar_front_left_90: yaw;" FIG. 15G - "radar_front_right_90: x;" FIG. 15H - "radar_front_right_90: y;" FIG. 15I - "radar_front_right_90: yaw;" FIG. 15J - "radar_back_right_45: x;" FIG. 15K - "radar_back_right_45: y;" and FIG. 15L - "radar_back_right_45: yaw."

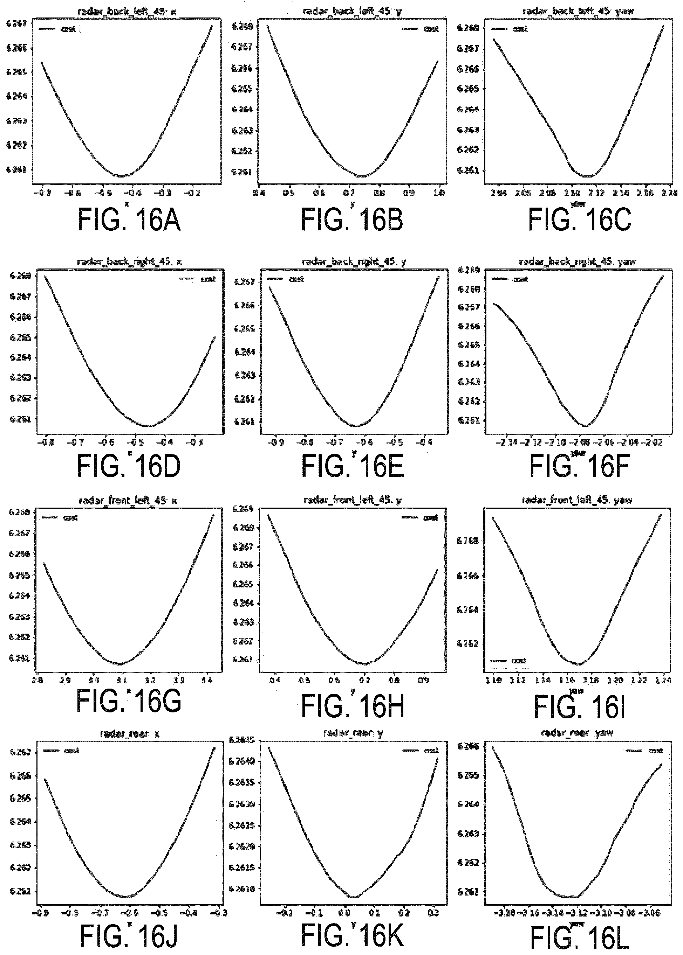

FIGs. 16A-16L illustrate example graphs of cost functions of an embodiment, according to some aspects of the disclosed technology. FIGs. 16A-16L further illustrate example unstructured cost functions of TT2 including: FIG. 16A - "radar_back_left_45: x;" FIG. 16B - "radar_back_left_45: y;" FIG. 16C - "radar_back_left_45: yaw;" FIG. 16D - "radar_back_right_45: x;" FIG. 16E - "radar_back_right_45: y;" FIG. 16F - "radar_back_right_45: yaw;" FIG. 16G - "radar_front_left_45: x;" FIG. 16H - "radar_front_left_45: y;" FIG. 16I - "radar_front_left_45: yaw;" FIG. 16J - "radar_rear:

x;" FIG. 16K - "radar_rear: y;" and FIG. 16L - "radar_rear: yaw."

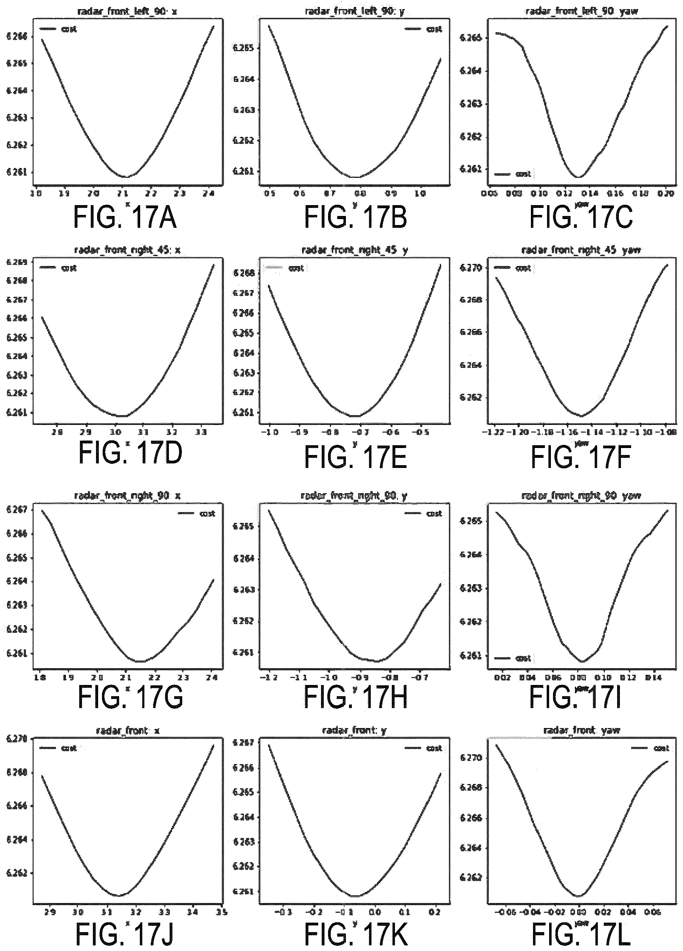

FIGs. 17A-17L illustrate example graphs of cost functions of the embodiment of FIGs. 16A-16L, according to some aspects of the disclosed technology. FIGs. 17A-17L further illustrate example unstructured cost functions of TT2 including: FIG. 17A - "radar_front_left_90: x;" FIG. 17B - "radar_front_left_90: y;" FIG. 17C - "radar_front_left_90: yaw;" FIG. 17D - "radar_front_right_45: x;" FIG. 17E - "radar_front_right_45: y;" FIG. 17F - "radar_front_right_45: yaw;" FIG. 17G - "radar_front_right_90: x;" FIG. 17H - "radar_front_right_90: y;" FIG. 17I - "radar_front_right_90: yaw;" FIG. 17J - "radar_front: x;" FIG. 17K - "radar_front: y;" and FIG. 17L - "radar_front: yaw."

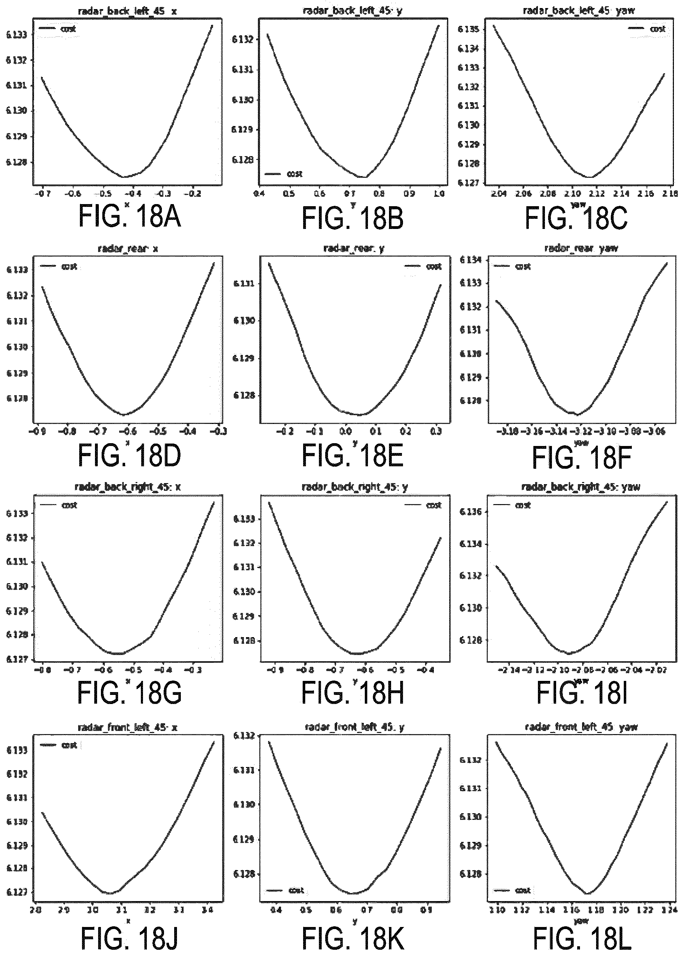

FIGs. 18A-18L illustrate example graphs of cost functions of an embodiment, according to some aspects of the disclosed technology. FIGs. 18A-18L further illustrate example cost functions including: FIG. 18A - "radar_back_left_45: x;" FIG. 18B - "radar_back_left_45: y;" FIG. 18C - "radar_back_left_45: yaw;" FIG. 18D - "radar_rear: x;" FIG. 18E - "radar_rear: y;" FIG. 18F - "radar_rear: yaw;" FIG. 18G - "radar_back_right_45: x;" FIG. 18H - "radar_back_right_45: y;" FIG. 18I - "radar_back_right_45: yaw;" FIG. 18J - "radar_front_left_45: x;" FIG. 18K - "radar_front_left_45: y;" and FIG. 18L - "radar_front_left_45: yaw."

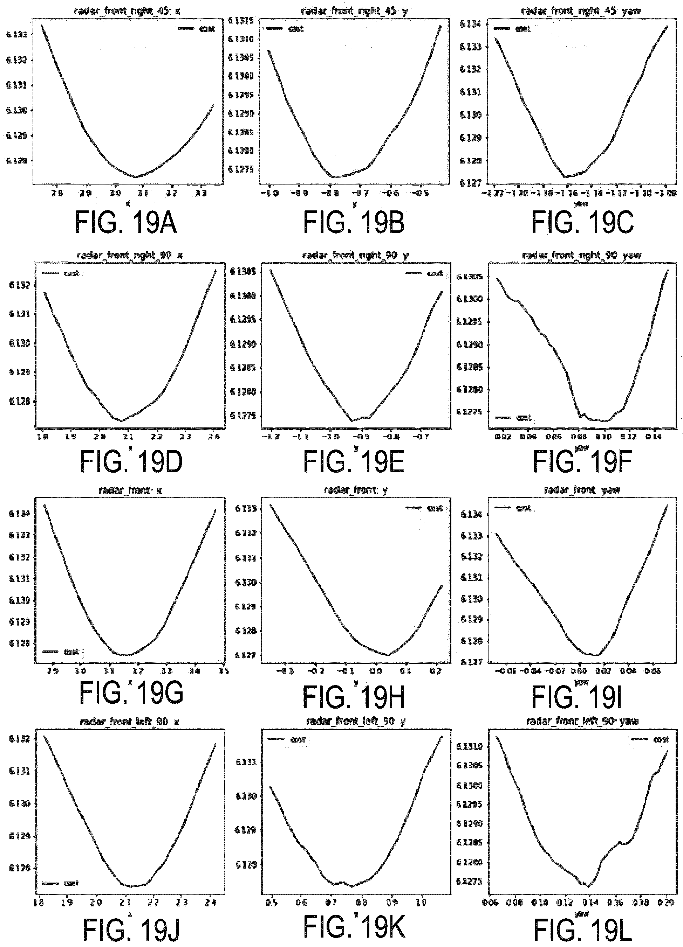

FIGs. 19A-19L illustrate example graphs of cost functions of the embodiment of FIGs. 18A-18L, according to some aspects of the disclosed technology. FIGs. 19A-19L further illustrate example cost functions including: FIG. 19A - "radar_front_right_45: x;" FIG. 19B - "radar_front_right_45: y;" FIG. 19C - "radar_front_right_45: yaw;" FIG. 19D - "radar_front_right_90: x;" FIG. 19E - "radar_front_right_90: y;" FIG. 19F - "radar_front_right_90: yaw;" FIG. 19G - "radar_front: x;" FIG. 19H - "radar_front: y;" FIG. 19I - "radar_front: yaw;" FIG. 19J - "radar_front_left_90: x;" FIG. 19K - "radar_front_left_90: y;" and FIG. 19L - "radar_front_left_90: yaw."

Combined optimization:

Table 7: Combined optimization

|  | X_rel (m) | Y_rel (m) | Yaw_rel (deg) |
|---|---|---|---|
| Radar_front | 0.109414 | 0.080543 | 0.943750 |
| Radar_rear | 0.151159 | 0.069371 | 1.444306 |
| Radar_front_left_45 | 0.050794 | 0.101874 | 0.906070 |
| Radar_front_right_45 | 0.131451 | 0.143884 | 1.289863 |
| Radar_front_left_90 | 0.059457 | 0.068720 | 0.827719 |
| Radar_front_right_90 | 0.141650 | 0.054079 | 1.174027 |
| Radar_back_left_45 | 0.103500 | 0.110067 | 0.817190 |
| Radar_back_right_45 | 0.098085 | 0.089360 | 0.855968 |

In some implementations, a combined optimization may include fixed z, roll, and pitch values for all of the radars (e.g., eight radars). This may include 24 DoF optimization (e.g., x, y, and yaw) times eight radars using a solver (e.g., a Ceres solver). A total of eight runs were performed including five in TT1 and three in TT2. For example, over a degree of variability in yaw may be equal to or greater than a similar performance as the target-based method. In some examples, the solver can take an extremely long time. As such, convergence may be difficult.

One radar at a time:

Table 8: One radar at a time

|  | X_rel (m) | Y_rel (m) | Yaw_rel (deg) |
|---|---|---|---|
| Radar_front | 0.081241 | 0.022952 | 1.363927 |
| Radar_rear | 0.113057 | 0.100160 | 1.596260 |
| Radar_front_left_45 | 0.043537 | 0.081900 | 0.815448 |
| Radar_front_right_45 | 0.062602 | 0.096582 | 0.869589 |
| Radar_front_left_90 | 0.098853 | 0.081124 | 1.182841 |
| Radar_front_right_90 | 0.093716 | 0.064431 | 1.564575 |
| Radar_back_left_45 | 0.061015 | 0.053671 | 0.815764 |
| Radar_back_right_45 | 0.051912 | 0.122894 | 0.699521 |

In some implementations, a process of utilizing one radar at a time may include fixed z, roll, and pitch values for all of the radars (e.g., eight radars). This may include 24 DoF optimization (e.g., x, y, and yaw) times eight radars using a solver (e.g., a Ceres solver). A total of eight runs were performed including five in TT1 and three in TT2. For example, while the results of Table 8 (e.g., one radar at a time) are similar to the results of Table 7 (e.g., combination optimization), runtime for analyzing one radar at a time is much shorter (e.g., 2-3 minutes) as all of the radars can be easily calibrated in parallel.

In other implementations, the processes and systems as described herein may further utilize on-road drive data (e.g., in real-time) to calibrate the radars and lidars of the vehicle. For example, a cloud radar-lidar calibration can include aggregating radar and lidar point clouds using odom/SLP (e.g., forLoc for reference maps), and minimizing entropy over multiple drive segments.

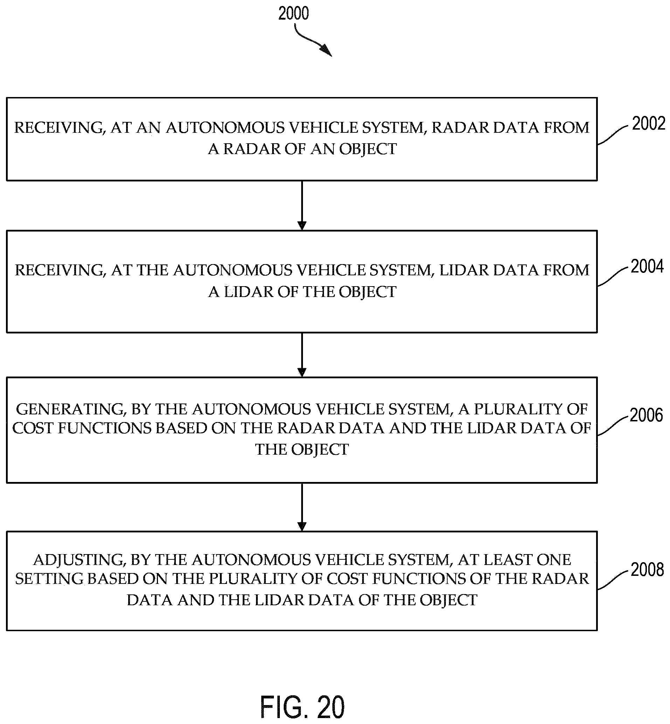

Having disclosed some example system components and concepts, the disclosure now turns to FIG. 20, which illustrates an example method 2000 for performing radar-to-lidar extrinsic calibration with on-road drive data. The steps outlined herein are exemplary and can be implemented in any combination thereof, including combinations that exclude, add, or modify certain steps.

At step 2002, method 2000 can include receiving, at an autonomous vehicle system, radar data from a radar of an object.

At step 2004, method 2000 can include receiving, at the autonomous vehicle system, lidar data from a lidar of the object. The radar data can include radar point clouds and the lidar data can include lidar point clouds. The receiving of the radar data and the lidar data can be received from a plurality of autonomous vehicle poses.

At step 2006, method 2000 can include generating, by the autonomous vehicle system, a plurality of cost functions based on the radar data and the lidar data of the object. The generating of the plurality of cost functions can include minimizing an entropy of a plurality of drive segments. The method 2000 can further include generating an aggregated map of a scene based on the radar data, the lidar data, and the minimizing of the entropy as the plurality of cost functions.

At step 2008, method 2000 can include adjusting, by the autonomous vehicle system, at least one setting based on the plurality of cost functions of the radar data and the lidar data of the object. The adjusting of the at least one setting can include aligning the radar point clouds and the lidar point clouds based on the plurality of cost functions.

The method 2000 can further include optimizing six degrees of freedom of the radar based on the plurality of cost functions.

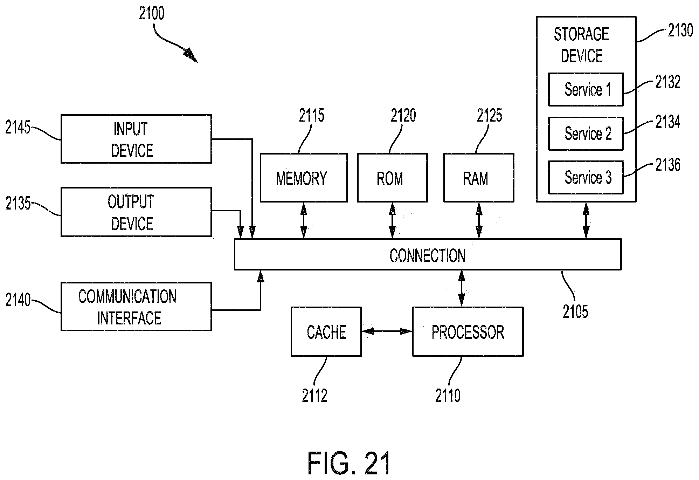

FIG. 21 illustrates an example processor-based system with which some aspects of the subject technology can be implemented. For example, processor-based system 2100 that can be any computing device making up internal computing system 110, remote computing system 150, a passenger device executing the rideshare app 170, internal computing device 130, or any component thereof in which the components of the system are in communication with each other using connection 2105. Connection 2105 can be a physical connection via a bus, or a direct connection into processor 2110, such as in a chipset architecture. Connection 2105 can also be a virtual connection, networked connection, or logical connection.

In some embodiments, computing system 2100 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example system 2100 includes at least one processing unit (CPU or processor) 2110 and connection 2105 that couples various system components including system memory 2115, such as read-only memory (ROM) 2120 and random-access memory (RAM) 2125 to processor 2110. Computing system 2100 can include a cache of high-speed memory 2112 connected directly with, in close proximity to, and/or integrated as part of processor 2110.

Processor 2110 can include any general-purpose processor and a hardware service or software service, such as services 2132, 2134, and 2136 stored in storage device 2130, configured to control processor 2110 as well as a special-purpose processor where software instructions are incorporated into the actual processor design. Processor 2110 may essentially be a completely self-contained computing system, containing multiple cores or processors, a bus, memory controller, cache, etc. A multi-core processor may be symmetric or asymmetric.

To enable user interaction, computing system 2100 includes an input device 2145, which can represent any number of input mechanisms, such as a microphone for speech, a touch-sensitive screen for gesture or graphical input, keyboard, mouse, motion input, speech, etc. Computing system 2100 can also include output device 2135, which can be one or more of a number of output mechanisms known to those of skill in the art. In some instances, multimodal systems can enable a user to provide multiple types of input/output to communicate with computing system 2100. Computing system 2100 can include communications interface 2140, which can generally govern and manage the user input and system output. The communication interface may perform or facilitate receipt and/or transmission wired or wireless communications via wired and/or wireless transceivers, including those making use of an audio jack/plug, a microphone jack/plug, a universal serial bus (USB) port/plug, an Apple® Lightning® port/plug, an Ethernet port/plug, a fiber optic port/plug, a proprietary wired port/plug, a BLUETOOTH® wireless signal transfer, a BLUETOOTH® low energy (BLE) wireless signal transfer, an IBEACON® wireless signal transfer, a radio-frequency identification (RFID) wireless signal transfer, near-field communications (NFC) wireless signal transfer, dedicated short range communication (DSRC) wireless signal transfer, 802.11 Wi-Fi wireless signal transfer, wireless local area network (WLAN) signal transfer, Visible Light Communication (VLC), Worldwide Interoperability for Microwave Access (WiMAX), Infrared (IR) communication wireless signal transfer, Public Switched Telephone Network (PSTN) signal transfer, Integrated Services Digital Network (ISDN) signal transfer, 3G/4G/5G/LTE cellular data network wireless signal transfer, ad-hoc network signal transfer, radio wave signal transfer, microwave signal transfer, infrared signal transfer, visible light signal transfer, ultraviolet light signal transfer, wireless signal transfer along the electromagnetic spectrum, or some combination thereof.

Communications interface 2140 may also include one or more Global Navigation Satellite System (GNSS) receivers or transceivers that are used to determine a location of the computing system 2100 based on receipt of one or more signals from one or more satellites associated with one or more GNSS systems. GNSS systems include, but are not limited to, the US-based Global Positioning System (GPS), the Russia-based Global Navigation Satellite System (GLONASS), the China-based BeiDou Navigation Satellite System (BDS), and the Europe-based Galileo GNSS. There is no restriction on operating on any particular hardware arrangement, and therefore the basic features here may easily be substituted for improved hardware or firmware arrangements as they are developed.

Storage device 2130 can be a non-volatile and/or non-transitory computer-readable memory device and can be a hard disk or other types of computer readable media which can store data that are accessible by a computer, such as magnetic cassettes, flash memory cards, solid state memory devices, digital versatile disks, cartridges, a floppy disk, a flexible disk, a hard disk, magnetic tape, a magnetic strip/stripe, any other magnetic storage medium, flash memory, memristor memory, any other solid-state memory, a compact disc read only memory (CD-ROM) optical disc, a rewritable compact disc (CD) optical disc, digital video disk (DVD) optical disc, a blu-ray disc (BDD) optical disc, a holographic optical disk, another optical medium, a secure digital (SD) card, a micro secure digital (microSD) card, a Memory Stick® card, a smartcard chip, a EMV chip, a subscriber identity module (SIM) card, a mini/micro/nano/pico SIM card, another integrated circuit (IC) chip/card, random access memory (RAM), static RAM (SRAM), dynamic RAM (DRAM), read-only memory (ROM), programmable read-only memory (PROM), erasable programmable read-only memory (EPROM), electrically erasable programmable read-only memory (EEPROM), flash EPROM (FLASHEPROM), cache memory (L1/L2/L3/L4/L5/L#), resistive random-access memory (RRAM/ReRAM), phase change memory (PCM), spin transfer torque RAM (STT-RAM), another memory chip or cartridge, and/or a combination thereof.

Storage device 2130 can include software services, servers, services, etc., that when the code that defines such software is executed by the processor 2110, it causes the system to perform a function. In some embodiments, a hardware service that performs a particular function can include the software component stored in a computer-readable medium in connection with the necessary hardware components, such as processor 2110, connection 2105, output device 2135, etc., to carry out the function.

As understood by those of skill in the art, machine-learning based classification techniques can vary depending on the desired implementation. For example, machine-learning classification schemes can utilize one or more of the following, alone or in combination: hidden Markov models; recurrent neural networks; convolutional neural networks (CNNs); deep learning; Bayesian symbolic methods; general adversarial networks (GANs); support vector machines; image registration methods; applicable rule-based system. Where regression algorithms are used, they may include including but are not limited to: a Stochastic Gradient Descent Regressor, and/or a Passive Aggressive Regressor, etc.

Machine learning classification models can also be based on clustering algorithms (e.g., a Mini-batch K-means clustering algorithm), a recommendation algorithm (e.g., a Miniwise Hashing algorithm, or Euclidean Locality-Sensitive Hashing (LSH) algorithm), and/or an anomaly detection algorithm, such as a Local outlier factor. Additionally, machine-learning models can employ a dimensionality reduction approach, such as, one or more of: a Mini-batch Dictionary Learning algorithm, an Incremental Principal Component Analysis (PCA) algorithm, a Latent Dirichlet Allocation algorithm, and/or a Mini-batch K-means algorithm, etc.

Embodiments within the scope of the present disclosure may also include tangible and/or non-transitory computer-readable storage media or devices for carrying or having computer-executable instructions or data structures stored thereon. Such tangible computer-readable storage devices can be any available device that can be accessed by a general purpose or special purpose computer, including the functional design of any special purpose processor as described above. By way of example, and not limitation, such tangible computer-readable devices can include RAM, ROM, EEPROM, CD-ROM or other optical disk storage, magnetic disk storage or other magnetic storage devices, or any other device which can be used to carry or store desired program code in the form of computer-executable instructions, data structures, or processor chip design. When information or instructions are provided via a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable storage devices.

Computer-executable instructions include, for example, instructions and data which cause a general purpose computer, special purpose computer, or special purpose processing device to perform a certain function or group of functions. By way of example computer-executable instructions can be used to implement perception system functionality for determining when sensor cleaning operations are needed or should begin. Computer-executable instructions also include program modules that are executed by computers in stand-alone or network environments. Generally, program modules include routines, programs, components, data structures, objects, and the functions inherent in the design of special-purpose processors, etc. that perform tasks or implement abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Other embodiments of the disclosure may be practiced in network computing environments with many types of computer system configurations, including personal computers, hand-held devices, multi-processor systems, microprocessor-based or programmable consumer electronics, network PCs, minicomputers, mainframe computers, and the like. Embodiments may also be practiced in distributed computing environments where tasks are performed by local and remote processing devices that are linked (either by hardwired links, wireless links, or by a combination thereof) through a communications network. In a distributed computing environment, program modules can be located in both local and remote memory storage devices.

## Claims

1. A computer-implemented method for performing radar-to-lidar calibration, the computer-implemented method comprising:

   receiving, by an autonomous vehicle system from a radar (500) of the autonomous vehicle system, radar data of an object in a scene, wherein the object is not a target specifically designed for sensor calibration, and wherein the radar data comprises multiple radar point clouds collected by the radar (500) from different poses of the autonomous vehicle system;
   receiving, by the autonomous vehicle system from a lidar (600) of the autonomous vehicle system, lidar data of the object in the scene, the lidar data comprising multiple lidar point clouds collected by the lidar (600) from different poses of the autonomous vehicle system;
   generating, by the autonomous vehicle system, a plurality of cost functions based on the radar data and the lidar data of the object, wherein the generating of the plurality of cost functions includes minimizing an entropy of a plurality of drive segments;
   generating, by the autonomous vehicle system, an aggregated map of the scene based on the radar data, the lidar data, and the minimizing of the entropy as the plurality of cost functions, and
   adjusting, by the autonomous vehicle system, at least one setting based on the plurality of cost functions of the radar data and the lidar data of the object, wherein the adjusting of the at least one setting includes aligning the radar point clouds and the lidar point clouds based on the plurality of cost functions.

2. The computer-implemented method of claim 1, wherein the object comprises a wall in the scene.

3. The computer-implemented method of any preceding claim, wherein the radar data and the lidar data are received from a plurality of autonomous vehicle poses relative to the object.

4. The computer-implemented method of claim 1, further comprising optimizing six degrees of freedom of the radar (500) based on the plurality of cost functions.

5. A system for performing radar-to-lidar calibration, the system comprising:

   one or more processors; and
   at least one computer-readable storage medium having stored therein instructions which, when executed by the one or more processors, cause the system to:

   receive, from a radar (500) of an autonomous vehicle, radar data of an object in a scene, wherein the object is not a target specifically designed for sensor calibration, and wherein the radar data comprises multiple radar point clouds collected by the radar (500) from different poses of the autonomous vehicle;
   receive, from a lidar (600) of the autonomous vehicle, lidar data of the object in the scene, the lidar data comprising multiple lidar point clouds collected by the lidar (600) from different poses of the autonomous vehicle;

generate a plurality of cost functions based on the radar data and the lidar data of the object, wherein to generate the plurality of cost functions includes minimizing an entropy of a plurality of drive segments;

generate, an aggregated map of the scene based on the radar data, the lidar data, and the minimizing of the entropy as the plurality of cost functions, and

adjust at least one setting based on the plurality of cost functions of the radar data and the lidar data of the object, wherein the adjusting of the at least one setting includes aligning the radar point clouds and the lidar point clouds based on the plurality of cost functions.

6. The system of claim 5, wherein the object comprises a wall in the scene.

7. The system of claim 5, wherein the radar data and the lidar data are received from a plurality of autonomous vehicle poses relative to the object.

8. The system of claim 5, wherein the instructions which, when executed by the one or more processors, cause the system to optimize six degrees of freedom of the radar (500) based on the plurality of cost functions.

9. A computer-readable medium comprising:
instructions that when executed by one or more processors, cause the one or more processors to perform the method of any of claims 1 to 4.

**Patentansprüche**

1. Computerimplementiertes Verfahren zum Durchführen einer Radar-zu-Lidar-Kalibrierung, wobei das computerimplementierte Verfahren Folgendes umfasst:

Empfangen, durch ein autonomes Fahrzeugsystem von einem Radar (500) des autonomen Fahrzeugsystems, von Radardaten eines Objekts in einer Szene, wobei das Objekt kein Ziel ist, das speziell für die Sensorkalibrierung entworfen ist, und wobei die Radardaten mehrere Radarpunktwolken umfassen, die durch das Radar (500) aus verschiedenen Stellungen des autonomen Fahrzeugsystems gesammelt werden;

Empfangen, durch das autonome Fahrzeugsystem von einem Lidar (600) des autonomen Fahrzeugsystems, von Lidardaten des Objekts in der Szene, wobei die Lidardaten mehrere Lidarpunktwolken umfassen, die durch das Lidar (600) aus verschiedenen Stellungen des autonomen Fahrzeugsystems gesammelt werden;

Erzeugen, durch das autonome Fahrzeugsystem, einer Vielzahl von Kostenfunktionen basierend auf den Radardaten und den Lidardaten des Objekts, wobei das Erzeugen der Vielzahl von Kostenfunktionen das Minimieren einer Entropie einer Vielzahl von Fahrsegmenten umfasst;

Erzeugen, durch das autonome Fahrzeugsystem, einer aggregierten Karte der Szene basierend auf den Radardaten, den Lidardaten und dem Minimieren der Entropie als die Vielzahl von Kostenfunktionen, und

Anpassen, durch das autonome Fahrzeugsystem, mindestens einer Einstellung basierend auf der Vielzahl von Kostenfunktionen der Radardaten und der Lidardaten des Objekts, wobei das Anpassen der mindestens einen Einstellung das Ausrichten der Radarpunktwolken und der Lidarpunktwolken basierend auf der Vielzahl von Kostenfunktionen umfasst.

2. Computerimplementiertes Verfahren nach Anspruch 1, wobei das Objekt eine Wand in der Szene umfasst.

3. Computerimplementiertes Verfahren nach einem der vorhergehenden Ansprüche, wobei die Radardaten und die Lidardaten von einer Vielzahl von Stellungen des autonomen Fahrzeugs relativ zu dem Objekt empfangen werden.

4. Computerimplementiertes Verfahren nach Anspruch 1, ferner umfassend das Optimieren von sechs Freiheitsgraden des Radars (500) basierend auf der Vielzahl von Kostenfunktionen.

5. System zum Durchführen einer Radar-zu-Lidar-Kalibrierung, wobei das System Folgendes umfasst:

einen oder mehrere Prozessoren; und
mindestens ein computerlesbares Speichermedium, auf dem Anweisungen gespeichert sind, die bei Ausführung durch den einen oder die mehreren Prozessoren das System zu Folgendem veranlassen:

Empfangen, von einem Radar (500) eines autonomen Fahrzeugs, von Radardaten eines Objekts in einer Szene, wobei das Objekt kein Ziel ist, das speziell für die Sensorkalibrierung entworfen ist, und wobei die Radardaten mehrere Radarpunktwolken umfassen, die durch das Radar (500) aus verschiedenen Stellungen des autonomen Fahrzeugs gesammelt werden;

Empfangen, von einem Lidar (600) des autonomen Fahrzeugs, von Lidardaten des Objekts in der Szene, wobei die Lidardaten mehrere Lidarpunktwolken umfassen, die durch das Lidar (600) aus verschiedenen Stellungen des autonomen Fahrzeugs gesammelt werden;

Erzeugen einer Vielzahl von Kostenfunktionen basierend auf den Radardaten und den Lidardaten des Objekts, wobei das Erzeugen der Vielzahl von Kostenfunktionen das Minimieren einer Entropie einer Vielzahl von Fahrsegmenten umfasst;

Erzeugen einer aggregierten Karte der Szene basierend auf den Radardaten, den Lidardaten und dem Minimieren der Entropie als die Vielzahl von Kostenfunktionen; und

Anpassen mindestens einer Einstellung basierend auf der Vielzahl von Kostenfunktionen der Radardaten und der Lidardaten des Objekts, wobei das Anpassen der mindestens einen Einstellung das Ausrichten der Radarpunktwolken und der Lidarpunktwolken basierend auf der Vielzahl von Kostenfunktionen umfasst.

6. System nach Anspruch 5, wobei das Objekt eine Wand in der Szene umfasst.

7. System nach Anspruch 5, wobei die Radardaten und die Lidardaten von einer Vielzahl von Stellungen des autonomen Fahrzeugs relativ zu dem Objekt empfangen werden.

8. System nach Anspruch 5, wobei die Anweisungen, wenn sie durch den einen oder die mehreren Prozessoren ausgeführt werden, das System veranlassen, sechs Freiheitsgrade des Radars (500) basierend auf der Vielzahl von Kostenfunktionen zu optimieren.

9. Computerlesbares Medium, das Folgendes umfasst:
Anweisungen, die bei Ausführung durch einen oder mehrere Prozessoren den einen oder die mehreren Prozessoren veranlassen, das Verfahren nach einem der Ansprüche 1 bis 4 durchzuführen.

**Revendications**

1. Procédé mis en œuvre par ordinateur pour effectuer un étalonnage radar-lidar, ledit procédé mis en œuvre par ordinateur consistant à :

recevoir, par un système de véhicule autonome, à partir d'un radar (500) dudit système de véhicule autonome, des données radar d'un objet dans une scène, dans lequel l'objet n'est pas une cible spécifiquement conçue pour l'étalonnage de capteurs, et dans lequel les données radar comprennent plusieurs nuages de points radar collectés par le radar (500) à partir de différentes postures du système de véhicule autonome ;

recevoir, par le système de véhicule autonome, à partir d'un lidar (600) du système de véhicule autonome, des données lidar de l'objet dans la scène, les données lidar comprenant plusieurs nuages de points lidar collectés par le lidar (600) à partir de différentes postures du système de véhicule autonome ;

générer, par le système de véhicule autonome, une pluralité de fonctions de coût sur la base des données radar et des données lidar de l'objet, dans lequel la génération de la pluralité de fonctions de coût inclut la minimisation d'une entropie d'une pluralité de segments de conduite ;

générer, par le système de véhicule autonome, une carte agrégée de la scène sur la base des données radar, des données lidar et de la minimisation de l'entropie en tant que pluralité de fonctions de coût, et

ajuster, par le système de véhicule autonome, au moins un paramètre sur la base de la pluralité de fonctions de coût des données radar et des données lidar de l'objet, dans lequel l'ajustement dudit au moins un paramètre inclut l'alignement des nuages de points radar et des nuages de points lidar sur la base de la pluralité de fonctions de coût.

2. Procédé mis en œuvre par ordinateur selon la revendication 1, dans lequel l'objet comprend un mur dans la scène.

3. Procédé mis en œuvre par ordinateur selon l'une quelconque des revendications précédentes, dans lequel les données radar et les données lidar sont reçues à partir d'une pluralité de postures du véhicule autonome par rapport à l'objet.

4. Procédé mis en œuvre par ordinateur selon la revendication 1, consistant en outre à optimiser six degrés de liberté du radar (500) sur la base de la pluralité de fonctions de coût.

5. Système destiné à effectuer un étalonnage radar-lidar, le système comprenant :

un ou plusieurs processeurs ; et
au moins un support de stockage lisible par ordinateur sur lequel sont stockées des instructions qui, lorsqu'elles sont exécutées par lesdits un ou plusieurs processeurs, amènent le système à :

recevoir, depuis un radar (500) d'un véhicule autonome, des données radar d'un objet dans une scène, dans lequel l'objet n'est pas une cible spécifiquement conçue pour l'étalonnage de capteurs, et dans lequel les données radar comprennent plusieurs nuages de points radar collectés par le radar (500) à partir de différentes postures du véhicule autonome ;
recevoir, depuis un lidar (600) du véhicule autonome, des données lidar de l'objet dans la scène, les données lidar comprenant plusieurs nuages de points lidar collectés par le lidar (600) à partir de différentes postures du véhicule autonome ;
générer une pluralité de fonctions de coût sur la base des données radar et des données lidar de l'objet, dans lequel la génération de la pluralité de fonctions de coût inclut la minimisation d'une entropie d'une pluralité de segments de conduite ;
générer une carte agrégée de la scène sur la base des données radar, des données lidar et de la minimisation de l'entropie en tant que pluralité de fonctions de coût, et
ajuster au moins un paramètre sur la base de la pluralité de fonctions de coût des données radar et des données lidar de l'objet, dans lequel l'ajustement dudit au moins un paramètre inclut l'alignement des nuages de points radar et des nuages de points lidar sur la base de la pluralité de fonctions de coût.

6. Système selon la revendication 5, dans lequel l'objet comprend un mur dans la scène.

7. Système selon la revendication 5, dans lequel les données radar et les données lidar sont reçues à partir d'une pluralité de postures du véhicule autonome par rapport à l'objet.

8. Système selon la revendication 5, dans lequel les instructions qui, lorsqu'elles sont exécutées par lesdits ou plusieurs processeurs, amènent le système à optimiser six degrés de liberté du radar (500) sur la base de la pluralité de fonctions de coût.

9. Support lisible par ordinateur comprenant :

des instructions qui, lorsqu'elles sont exécutées par un ou plusieurs processeurs, amènent lesdits un ou plusieurs processeurs à mettre en œuvre le procédé selon l'une quelconque des revendications 1 à 4.

FIG. 1

FIG. 2A

FIG. 2B

FIG. 3A

FIG. 3B

400

FIG. 4

500

FIG. 5A

FIG. 5B

FIG. 5C

FIG. 5D

FIG. 5E

FIG. 5F

FIG. 6A  FIG. 6B  FIG. 6C

FIG. 6D  FIG. 6E  FIG. 6F

FIG. 7A

FIG. 7B

FIG. 8

FIG. 9A

FIG. 9B

FIG. 10A

FIG. 10B

FIG. 10C

FIG. 11A

FIG. 11B

FIG. 12A

FIG. 12B

FIG. 13

FIG. 14A

FIG. 14B

FIG. 14C

FIG. 14D

FIG. 14E

FIG. 14F

FIG. 14G

FIG. 14H

FIG. 14I

FIG. 14J

FIG. 14K

FIG. 14L

FIG. 15A

FIG. 15B

FIG. 15C

FIG. 15D

FIG. 15E

FIG. 15F

FIG. 15G

FIG. 15H

FIG. 15I

FIG. 15J

FIG. 15K

FIG. 15L

FIG. 16A

FIG. 16B

FIG. 16C

FIG. 16D

FIG. 16E

FIG. 16F

FIG. 16G

FIG. 16H

FIG. 16I

FIG. 16J

FIG. 16K

FIG. 16L

FIG. 17A

FIG. 17B

FIG. 17C

FIG. 17D

FIG. 17E

FIG. 17F

FIG. 17G

FIG. 17H

FIG. 17I

FIG. 17J

FIG. 17K

FIG. 17L

FIG. 18A

FIG. 18B

FIG. 18C

FIG. 18D

FIG. 18E

FIG. 18F

FIG. 18G

FIG. 18H

FIG. 18I

FIG. 18J

FIG. 18K

FIG. 18L

FIG. 19A

FIG. 19B

FIG. 19C

FIG. 19D

FIG. 19E

FIG. 19F

FIG. 19G

FIG. 19H

FIG. 19I

FIG. 19J

FIG. 19K

FIG. 19L

2000

RECEIVING, AT AN AUTONOMOUS VEHICLE SYSTEM, RADAR DATA FROM A RADAR OF AN OBJECT — 2002

RECEIVING, AT THE AUTONOMOUS VEHICLE SYSTEM, LIDAR DATA FROM A LIDAR OF THE OBJECT — 2004

GENERATING, BY THE AUTONOMOUS VEHICLE SYSTEM, A PLURALITY OF COST FUNCTIONS BASED ON THE RADAR DATA AND THE LIDAR DATA OF THE OBJECT — 2006

ADJUSTING, BY THE AUTONOMOUS VEHICLE SYSTEM, AT LEAST ONE SETTING BASED ON THE PLURALITY OF COST FUNCTIONS OF THE RADAR DATA AND THE LIDAR DATA OF THE OBJECT — 2008

FIG. 20

FIG. 21

EP 4 180 834 B1

**EP 4 180 834 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018231654 A1

- US 2021316669 A1

**Non-patent literature cited in the description**

- **HENG L**. Automatic targetless extrinsic calibration of multiple 3D LiDARs and radars. *IEEE/RSJ INTER-NATIONAL CONFERENCE ON INTELLIGENT RO-BOTS AND SYSTEMS (IROS)*, 24 October 2020